# EUROPEAN PATENT APPLICATION

(11) **EP 2 835 941 A1**
(43) Date of publication of application: **11.02.2015**
(21) Application number: 13773152.7
(22) Date of filing: 26.03.2013
(51) Int. Cl.: H04L 12/717, H04L 12/70

(54) **NETWORK SYSTEM, CONTROLLER, AND PACKET AUTHENTICATION METHOD**

(30) Priority: 03.04.2012 JP 2012084718
(71) Applicant: NEC Corporation, Tokyo 108-8001 (JP)
(72) Inventor: TOGAWA Osamu, Tokyo 108-8001 (JP)
(74) Representative: Reeve, Nicholas Edward
(86) International application number: PCT/JP2013/058874
(87) International publication number: WO 2013/150925

(57) **Abstract**

In a stage before a packet reaches a connection destination host (server and so on), an access control is carried out in a connection unit. Specifically, a controller managing a switch receives from the switch, a notice of an unknown packet sent from an access source host that is used by a plurality of users having different authorities. The controller inquires authentication data of a packet transmission user to the access source host. The controller inquires the permission or refusal of access to the access destination host based on the authentication data. When the access is permitted, the controller instructs the switch to register a flow entry of transfer of the packet. When the access is refused, the controller instructs the switch to register a flow entry of discard of the packet.

## Description

### Technical Field

The present invention is related to a network system, especially to a network system in which a packet transfer function and a route control function of network equipment are separated.

### Background Art

As one of use forms of a host of a computer system and a network, a plurality of users having different authorities log in a common host (sharing host) and execute a program so as to access from a sharing host to another host in the network. An example is shown below.

### (1) Internal sharing hosting service

A service in which users in different sections share a network and hosts is considered in a large scale organization. The use authority of another server and a network as an access destination from the sharing host is different depending on the user.

### (2) External sharing hosting service

A sharing hosting service is considered which is provided by a carrier and an Internet service provider. This is a case where a service used by only the user conducting additional contract is accessed from the sharing host.

### (3) Cloud computing service

A service to provide many users with the environment of the development/execution of application software in the cloud computing service is thought of. It is a part of so-called PaaS (Platform as a Service). The realization forms of PaaS are various and include one which is substantively carried out by the sharing host. This fits with the form when the service of the addition contract and so on exist, like an example of the above-mentioned external sharing hosting service (2).

To secure enough network security in such environment is accompanied by a kind of difficulty. In case of trying a connection from the sharing host, s user and a program at a transmission source cannot be identified even if the connection is monitored in units of packets. That is, this is because the destination which should be permitted to the packet cannot be determined. Therefore, it is difficult to carry out an access control in a switch and a router on a data-link layer (to be referred to as an L2 layer) and a network layer (to be referred to as an L3 layer) for a packet transfer.

As one of methods which realize security, an access control method is thought of in which the authentication/permission of the user is carried out in the upper layer of a receiving side host without carrying out an access control in L2 and L3. As such an access control method, there is an access control method peculiar every service or an access control method which is general like "Kerberos" and "IDENT" (reference document: RFC1413).

However, in the access control method peculiar to every service, there is a risk of serious attack when the processing of the receiving side host has fragility. It is desirable to take measures of the security on a plurality of network layers in order to realize the firmer security.

Also, because the general access control method is widely used and is sufficiently verified, the general access control method can expect to have a higher safety level than the access control method peculiar to every service. However, in the existing services, there is a service not corresponding to the general access control method. To make the not corresponding service correspond to the general access control method, there is a problem that the change of the connection procedure is required. Note that "IDENT" has not been used at present due to the problems such as the reliability and the outflow of data.

As another method, there is a method which provides the virtual host environment separated for every user by using a virtualization technique in a physical sharing host. In this case, it becomes possible to easily carry out an access control to the packet by the router and the L2 switch by allocating the "IP address" and "VLAN ID", which are different, to each of the packets transmitted from each of the virtual host environments. However, when using the virtual host environment, more hardware resources than the simple sharing host become necessary.

It is required that the access control in a connection unit is carried out in a stage before the packet reaches a server of a connection destination in order to secure the advanced security in the communication from the sharing host without the above-mentioned evil. Therefore, in the network equipment such as a router and a switch which have a transfer/relay function of a packet, it is sufficient to appropriately determine permission and non-permission according to the source side user even if the "IP addresses" and "VLAN IDs" of the packet transmission source side are identical.

In order to attain such a purpose, a technique is opened in which a connection request is issued to a firewall apparatus and the NAT (network address translation) apparatus in units of connections and only the packets of the connection are permitted to be transferred.

### (Patent Literature 1)

For example, Patent Literature 1 (JP 2008-085470A) discloses an IP application service provision system. The IP application service provision system makes it possible to carry out an inbound communication from an external side to an internal side in an intended IP application communication between an internal node which belongs to an internal network and concealed from an external network by a gateway unit which is set to permit only the outbound communication from the internal side to the external side and an external node which belongs to the external network. At this time, the internal node under the gateway unit regularly transmits a control packet for notification of a control channel port and and maintenance of communication allowable entries of a control channel path to a connection support apparatus on the external network. Also, the internal node receives a notice of connection destination address and port corresponding to the external node through a control channel from the connection support apparatus. Also, the internal node actively opens a data channel of the IP application to the connection destination address and port which are informed with the notice.

### (Patent Literature 2)

Also, Patent Literature 2 (JP Patent No. 4,362,132B2) discloses an address conversion method, an access control method, and an apparatus which uses these methods. In this technique, an access control rule prescribed for every transmission source apparatus or transmission source network on the side of a global network and an address conversion rule prescribed for every transmission source apparatus are recorded previously to a database. When receiving a packet from the side of a global network, access is limited from the global network to a private network according to an access control rule which contains transmission source data. Also, a destination address is converted according to an address conversion rule which contains transmission source data, to transfer data from the side of the global network to the side of the private network. When receiving a packet from the side of the private network, a transmission source address is converted according to the address conversion rule which contains transmission source data, and data from the side of the private network is transferred to the side of the global network.

However, there are the following problems in these techniques.

### (First problem)

The first problem is in that a connection procedure different from a usual procedure should be carried out to the user and the application.

In Patent Literature 1 (JP 2008-085470A), a connection is requested to an agency node arranged outside the firewall apparatus/the NAT apparatus. Then, because the connection is established in the direction from the communication node to the requesting source inside the firewall apparatus/the NAT apparatus in response to the request, the direction of the connection is reverses from the usual direction.

In the technique disclosed in Patent Literature 2 (Japanese Patent 4,362,132B2), the connection with the firewall apparatus/the NAT apparatus is established to carry out authentication processing, before the connection procedure with a communication end.

Also, in Patent Literature 1 (JP 2008-085470A) and Patent Literature 2 (Japanese Patent 4,362,132B2), the transmission source needs to know addresses of an intermediate node and the firewall apparatus/ NAT apparatus in addition to an address of the original communication end.

### (Second problem)

The second problem is in that the number of connections which can be established at a same time is restricted to the number of entries held by the firewall apparatus/NAT apparatus.

Both of Patent Literature 1 (JP 2008-085470A) and Patent Literature 2 (Japanese Patent 4,362,132B2) needs to register entries to make it possible to carry out packet transfer to the firewall apparatus/ NAT apparatus before trying the establishment of the connection and to hold the entries in the existence state of the connection.

### (Third problem)

The third problem is in that the conventional technique is not appropriate to a large-scale configuration of multi-stage of a plurality of firewall apparatuses/NAT apparatuses.

Patent literature 2 (Japanese Patent 4,362,132B2) must issue a request to each apparatus on a route. This means that the load of a communicating user and an application increases.

Also, in both of Patent Literature 1 (JP 2008-085470A) and Patent Literature 2 (Japanese Patent 4,362,132B2), when a network is configured such that communication routes are concentrated in a specific unit, many entries are used in the specific unit. Therefore, the second problem easily appears. Because the firewall apparatus/NAT apparatus are often used as the gateway of the network, such a configuration is very general.

It is thought of to avoid this problem by a filtering rule. For example, a method is thought of that when a packet is transmitted from a firewall apparatus/NAT apparatus to another apparatus, the access control is carried out in one side and communication is always permitted in the other side.

However, because the load of the setting and the operation increases according to the scale of the network in such an avoiding technique, the technique is not appropriate to a large-scale multi-stage configuration.

### (Patent Literature 3)

Moreover, as a related technology, Patent Literature 3 (JP 2000-295274A) discloses a packet switching apparatus. This packet switching apparatus registers and holds a result of routing processing on an IP flow table by using a source IP address and a destination IP address as a search key. Also, when receiving a packet, the IP flow table is searched by using the source IP address and the destination IP address as the search key. When a corresponding IP flow is registered, the packet is transferred to an appropriate output port based on the routing processing result in the corresponding IP flow without being switched to the routing processing by a microprocessor. Also, the packet switching apparatus is connected with a network interface and executes lower layer processing to the received packet.

### (Patent Literature 4)

Also, Patent Literature 4 (JP 2002-044143A) discloses a communication control system, a router and a communication control method. In this related technique, in the communication control method which carries out a route control for unicast to a terminal by inserting/deleting a route for every host into/from a unicast route table, a multicast group management table is managed by broadcasting a unicast address of the terminal which wants to receive the packet destined to a multicast address and multicast addresses in an application range of the communication control system, and the multicast route table is generated from the above unicast route table and the multicast group management table.

### (Patent Literature 5)

Also, Patent Literature 5 (JP 2011-166700A) discloses a network system and a packet speculation transferring method. In the related technique, in a network configured from network equipment that a control function of the network is separated to an external controller, a packet having no route data in the flow table which manages the route data of network equipment is speculatively transferred and is suspended immediately before transmitting to an external network. The network equipment determines the success or failure of the speculative transfer based on the setting of the flow table from the controller. Also, data is held in all the network equipments through which the packet was speculatively transferred, and when it is determined that the speculative transfer is failed, the packet which was speculatively transferred is cancelled by sending a speculation discard packet, and the packet is transmitted once more from the network equipment which made a mistake in the destination.

### (Patent Literature 6)

Also, Patent Literature 6 (JP 2007-529135A) discloses a technique of predictive ad hook. This technique is related to a system which carries out an efficient routing in the radio communication network of a plurality of hops which includes a plurality of network nodes. Quality data showing a link state between the infra nodes is acquired in this system. Also, the link quality data is used in the route determining process in the infra nodes which uses a predictive procedure. Then, a data packet is sent according to the determined route. The link quality data contains data of temporal change of the link state and the predictive procedure uses the data of the temporal change of the link state in the predictive procedure.

### (Explanation of CU separate type network)

As one of control systems of a network system at present, a CU (C: control plane/U: user plane) separate type network which controls a node unit (user plane) from an external control system (control plane) is proposed.

As an example of the CU separate type network, an open flow network which uses an open flow (OpenFlow) technique which controls switches from a controller to carry out a route control of the network is exemplified. The details of the open flow technique are described in Non-Patent Literature 1 (OpenFlow switch Specification, Version 1.1.0). Note that opening flow network is an example only.

### (Description of open flow network)

A control unit such as an open flow controller (OFC) controls the conduct of node units by operating a flow table for a route control of the node units such as open flow switches (OFS) in the open flow network.

Hereinafter, for the simplification of description, the open flow controller is written as a "controller (OFC)" and the open flow switch is written as a "switch (OFS)".

The controller (OFC) and the switches (OFS) are connected by a secure channel to control the switches (OFS) by the controller (OFC) using an open flow message (OpenFlow Message) as a control message conforming to an open flow protocol (OpenFlow Protocol).

The switches (OFS) in the open flow network configure an open flow network and are edge switches and core switches under the control of the controller (OFC). A series of packets from the reception of packets in an input side edge switch (ingress) to a transmission from an output side edge switch (egress) in the open flow network is called a flow.

A packet may be read as a frame. A difference between the packet and the frame is only the difference in a unit (PDU: Protocol Data Unit) of data handled by the protocol. The packet is the PDU of "TCP/IP" (Transmission Control Protocol/Internet Protocol). On the other hand, the frame is the PDU of the "Ethernet (registered trademark)".

The flow table is a table storing a flow entry which defines a predetermined operation (action) which should be carried out to the packet (communication data) conforming to a predetermined matching condition (rule).

The rule of the flow entry is defined based on a combination of some of a destination address, a source address, a destination port, and a source port, which are contained in a header field of each protocol hierarchy of the packet, and is possible to distinguish. Note that the above address contains a MAC address (Media Access Control Address) and an IP address (Internet Protocol Address). Also, in addition to the above, data of an entrance port (ingress Port) is usable for the rule of the flow entry. Also, data expressing a part (or all) of a value of the header field of the packet showing a flow as the rule of the flow entry by a normal expression and wildcard "*" can be specified.

The action of a flow entry shows an operation such as "outputting/transferring a packet to a specific port", "discard/abandoning a packet (deleting)", and "rewriting a header of the packet". For example, if identification data of the output port (output port number and so on) is shown in the action of the flow entry, the switch (OFS) outputs the packet to the port corresponding to this, and if the identification data of the output port is not shown, the switch (OFS) discards the packet. Or, if the header data is shown in the action of the flow entry, the switch (OFS) rewrites the header of the packet based on the header data.

The switch (OFS) in the open flow network executes the action of the flow entry to a group of the packets (a series of packets) conforming to the rule of the flow entry.

### Citation List

[Patent Literature 1] JP 2008-085470A
[Patent Literature 2] Japanese patent 4,362,132B2
[Patent Literature 3] JP 2000-295274A
[Patent Literature 4] JP 2002-044143A
[Patent Literature 5] JP 2011-166700A
[Patent Literature 6] JP 2007-529135A
[Non-Patent Literature 1] "OpenFlow switch Specification, Version 1.1.0 Implemented", [Online] February 28, 2011,
The Internet (URL: http://www.openflowswitch.org/documents/openflow-spec-v1.1.0.pdf)

### Summary of the Invention

In the present invention, presupposing the environment of sharing hosting service, an effective method which solves the above-mentioned problem of the existing technique is proposed. In such environment, it is expected that the sharing host and network equipment are sufficiently managed by an identical substance (common administrator). Therefore, it is easy to introduce a connection procedure which is different from the conventional technique in a range of a closed network configured from these equipments. Also, it can be supposed that problems such as the reliability and the outflow of data do not generate (or, the generation possibility is very low) because it is possible to trust among the communication equipments in the range of the closed network.

An object of the present invention is to provide a network system in which the determination of permission or refusal of the packet transfer is carried out at a time that a packet reaches network equipment, and when the packet transfer is permitted, the flow entry is registered which permits the transfer of the packet to the network equipment.

In the conventional technique, an entry needs to be registered previously before the packet reaches the network equipment. On the other hand, in the present invention, the entry is registered after the packet reaches network equipment. That is, the entry is registered by so-called "on demand".

A network system according to the present invention includes: a switch configured to carry out processing of a reception packet based on a flow entry which defines a rule and an action to uniformly control packets as a flow; and a controller configured to issue an instruction of registration of the flow entry to said switch. The controller carries out processing of determination of transfer permission or refusal of a packet arriving at said switch based on authority of a transmission source of the reception packet, and instructs said switch to register the flow entry of transfer of the packet when the transfer of the packet is permitted.

A controller according to the present invention includes: a function section of issuing an instruction of registration of a flow entry to a switch which carries out processing of a reception packet based on the flow entry which defines a rule and an action to uniformly control packets as a flow; a function section of carrying out processing of determining permission or refusal of transfer of the packet based on authority of the packet transmitting source user to the packet arriving at said switch; and a function section of instructing said switch to register the flow entry of transfer of the packet when the transfer of the packet is permitted.

In a packet authenticating method of the present invention, a switch carries out processing of a reception packet based on a flow entry which defines a rule and an action to uniformly control packets as a flow. A controller carries out processing of determining permission or refusal of transfer of a packet arriving at said switch based on authority of a packet transmitting source, and instruction of registration of the flow entry of transfer of the packet to said switch, when the transfer of the packet is permitted.

A program according to the present invention is a program to make a computer execute: instructing a switch to register a flow entry, wherein said switch processing a reception packet based on the flow entry which defines a rule and an action to uniformly control packets as a flow; carrying out processing of determining permission or refusal of transfer of a packet arriving at said switch; and instructing said switch to register the flow entry of transfer of the packet, when the transfer of the packet is permitted. Note that the program according to the present invention may be stored in a storage unit or a storage medium.

### Brief Description of the Drawings

FIG. 1 is a diagram showing a configuration example of a network system according to the present invention.
FIG. 2 is a diagram showing an initial state of the flow table.
FIG. 3 is a flow chart showing a flow of the processing of authentication/permission.
FIG. 4 is a diagram showing a series of operations when a user having an appropriate authority tries access in the initial state of the flow table.
FIG. 5 is a diagram showing a state that a flow entry of "transfer" was registered on the flow table.
FIG. 6 is a diagram showing a series of operations when a user who does not have the appropriate authority when being tries access in the state that the flow entry of "transfer" was registered on the flow table.
FIG. 7 is a diagram showing the state that the flow entry of "discard" was registered on the flow table.
FIG. 8 is a diagram showing the state which the flow table is occupied with many flow entries of "discard".
FIG. 9 is a diagram showing a series of operations when the flow table recovers from the state occupied with the many flow entries of "discard".

### Description of the Exemplary Embodiments

The present invention deals with a CU separate type network. In this case, an open flow network as one of the CU separate type network will be described as an example. However, the present invention is not limited to the open flow network.

### <Exemplary Embodiments>

Below, the exemplary embodiment of the present invention will be described with reference to the attached drawings.

### (System configuration)

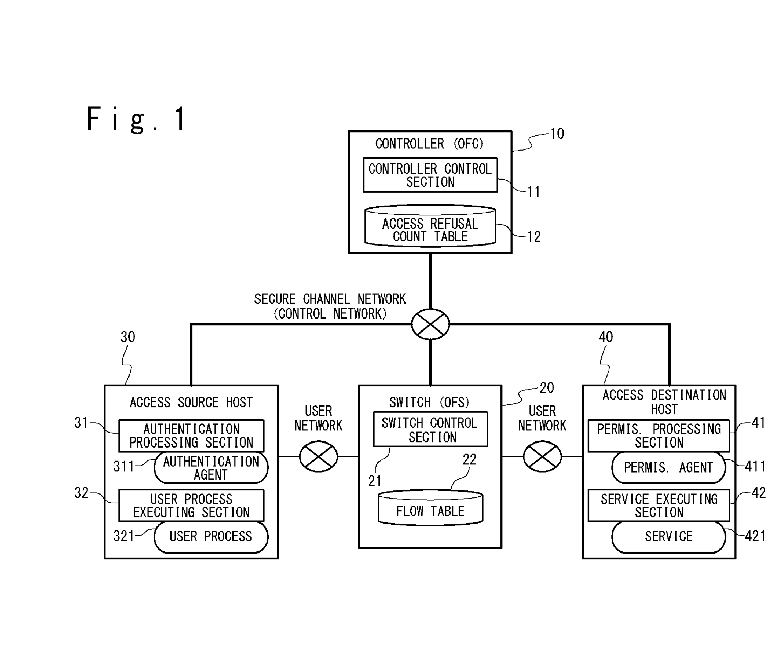

Referring to FIG. 1, a configuration example of a network system according to the present invention will be described.

The network system according to the present invention contains a controller (OFC) 10, a switch (OFS) 20, an access source host 30 and an access destination host 40.

Each of the controller (OFC) 10, the switch (OFS) 20, the access source host 30 and the access destination host 40 may be plural.

The controller (OFC) 10 is a control unit which manages the switch (OFS) 20.

The switch (OFS) 20 configures a network and is a packet transfer unit which relays communication between the access source host 30 and the access destination host 40. Here, an input side edge switch (ingress) is assumed which receives a packet from the access source host 30 first. Of course, the switch (OFS) 20 may be configured as a multi-stage structure. That is, switches (OFS) having the same structure as the switch (OFS) 20 may be arranged between the switch (OFS) 20 and the access destination host 40. These switches (OFS) are supposed to be managed centralizedly by the controller (OFC) 10.

The access source host 30 is a sharing host used when a plurality of users having different authorities executes a log-in or a program to try a connection with the access destination host 40.

The access destination host 40 is a destination host to which the user tries the connection from the access source host 30.

The access source host 30 and the access destination host 40 carry out the network communication through the switch (OFS) 20. In this case, the access source host 30 is equivalent to a client terminal. The access destination host 40 is equivalent to a server apparatus. In order to establish a TCP connection between the client terminal and the server apparatus, the client terminal transmits a "SYN packet" to the server apparatus, the server apparatus replies to the client terminal to return an "ACK packet" and the client terminal sends back the "ACK packet". For example, the access source host 30 transmits the SYN packet to the access destination host 40. When receiving the SYN packet, the access destination host 40 replies to the ACK packet. When receiving the ACK packet from the access destination host 40, the access source host 30 sends back the ACK packet to the access destination host 40. Note that the access source host 30 and the access destination host 40 are not limited to the client terminal and the server apparatus, and may be network equipment not corresponding to the open flow technique.

As mentioned above, each of a plurality of users using the access source host 30 has the different authority. Of course, the users having the identical authority may exist. There are the user that access to the access destination host 40 is permitted and the user that the access to the access destination host 40 is refused, among the users using the access source host 30, depending on the authority.

The controller (OFC) 10 and the switch (OFS) 20 are connected by a "secure channel" which is a channel protected by a dedicated line and an SSL (Secure Socket Layer). A control network composed of the secure channel is called a "secure channel network". The controller (OFC) 10 and the switch (OFS) 20 carry out communication through the secure channel network according to an open flow protocol. In this case, the controller (OFC) 10 is connected with the switch (OFS) 20 through the secure channel network, to receive a notice from the switch (OFS) 20 and to send an instruction to the switch (OFS) 20.

The controller (OFC) 10 controls how the switch (OFS) 20 should processes a packet which arrives at the switch (OFS) 20, by operating a flow entry as route data corresponding to each packet.

The controller (OFC) 10 registers many flow entries in the switch (OFS) 20. A set of flow entries is managed in the form of a table called a "flow table".

The switch (OFS) 20 is a unit which carries out the transfer of the packet and so on, and operates the received packet according to the contents of the flow entry which has been registered on the flow table therein. As the "operation of a packet" which is carried out in the present invention, there are three kinds of operations such as transfer of the packet, discard of the packet and notification to the controller (OFC) 10. That is, the switch (OFS) 20 carries out processing of passage of a packet/blocking-off of the packet/inquiry of a flow entry (route control request) according to the contents of the flow entry which has been registered on the flow table.

The switch (OFS) 20 holds at least one flow table. The controller (OFC) 10 holds all the same flow tables as the flow tables of the switches (OFS) 20. That is, the controller (OFC) 10 holds a master table of the flow table of each of the switches (OFS) 20.

Note that the phrase of "holding the flow table" means managing the flow table. If it is possible to manage the flow table through the network, the flow table needs not to be actually held in the switch. That is, the depository of the flow table may be outside in addition to the inside of the apparatus which manages the flow table. For example, it is possible to share the identical flow table on the network by the controller (OFC) 10 and the switch (OFS) 20.

A set of flow entries is registered in the flow table. Comparing general network equipment, it is similar to a routing table of a usual router and routing entries, or a set of filtering rules of a firewall apparatus/NAT apparatus and individual rules (entries).

However, more data is contained in the flow entry of the open flow than the routing entry and the rule in the general network equipment. For example, data such as a more complicated packet matching condition, a time-out time of the flow entry or operation data of the packet and so on are contained.

### (Configuration of controller (OFC))

Next, a configuration example of the controller (OFC) 10 will be described.

The controller (OFC) 10 is composed of a controller control section 11 and an access refusal count table 12.

The controller control section 11 carries out processing of the controller (OFC) in the open flow network. Also, the controller control section 11 carries out communication and cooperation with the switch (OFS) 20, the access source host 30 and the access destination host 40 through the secure channel network.

The access refusal count table 12 is a storage area to store the number of times of failure of the permission of access (the number of times of refusal) for every user. The access refusal count table 12 may be realized by a database and so on.

### (Configuration of switch (OFS))

Next, a configuration example of the switch (OFS) 20 will be described.

The switch (OFS) 20 is composed of a switch control section 21 and a flow table 22.

The switch control section 21 carries out processing of the switch (OFS) in the open flow network. Also, the switch control section 21 carries out communication and cooperation with the controller (OFC) 10 through the secure channel network. Also, the switch control section 21 communicates with the access source host 30 and the access destination host 40 through the user network.

The flow table 22 is of a set of flow entries. In this case, each record of the flow table 22 is the flow entry. The flow table 22 may be realized by a database.

The flow entry contains data of a "packet matching condition" (rule), an "operation to the packet" (action), and a "time-out condition".

The switch control section 21 uses 4 items of a "transmission source IP address", a "transmission source port number", a "destination IP address", and a "destination port number" as the "packet matching condition".

The switch control section 21 searches the flow table 22 based on the above-mentioned 4 items as a search key when receiving a packet, and operates the packet according to the "operation to the packet" specified in the matching flow entry.

Note that various values can be used as the "time-out condition". For example, a common fixation value in the system or a value which changes according to the use situation of the system (empty flow entry value) is used. Also, one or both of an "idle time" that the flow entry shows unused time and a "hard time" (fixation time) showing time from registration of the flow entry may be used.

In this case, the switch control section 21 uses 2 items of the "idle time-out" and the "hard time-out" as the "time-out condition" of the flow entry.

### (Configuration of access source host)

Next, a configuration example of the access source host 30 will be described.

The access source host 30 includes an authentication processing section 31 and a user process executing section 32.

The authentication processing section 31 executes an authentication agent 311. The authentication agent 311 is a resident software/ program to carry out the processing of specifying a user in response to an inquiry of user data, and returning the user data of the specified user. As an example of the user data, the authentication data such as a user ID/account and a password or some data for specifying a user/host are exemplified. The authentication agent 311 has two functions. One is to return the data of a packet transmitting user in response to the inquiry. Another is to restrict use of the access source host 30 by the user specified according to an instruction. Also, the authentication processing section 31 carries out communication and cooperation with the controller (OFC) 10 through the secure channel network.

The user process executing section 32 executes a process 321 of the user. The process 321 of the user is a software/program to try a connection to service of the access destination host 40. As an example of the process 321 of the user, the software which needs an access control and which is consciously operable by the human being by using a sharing host is exemplified, like a remote shell (ssh, telnet, and so on,) to log into the access destination host and a client software for connection to a database arranged in the access destination host. Also, the user process executing section 32 communicates with the switch (OFS) 20 and the access destination host 40 through the user network.

### (Configuration of access destination host)

Next, a configuration example of the access destination host 40 will be described.

The access destination host 40 includes a permission processing section 41 and a service executing section 42.

The permission processing section 41 executes a permission agent 411. The permission agent 411 is a resident software/program to carry out processing of determining an inquiry of permission or refusal of an access based on the user data in response to an inquiry of permission or refusal of the access and returning the determination result. The role of permission agent 411 is to return a determination result of the permission or refusal of access by the user according to the inquiry. Also, the permission processing section 41 carries out communication and cooperation with the controller (OFC) 10 through the secure channel network.

The service executing section 42 executes a service 421. The service 421 is a software/program to provide some function through the network after establishing a connection with the process 321 of the user. As an example of the service 421, an application and a group-ware installed on a server and a virtual machine (VM) built on the server are exemplified. Also, the service executing section 42 communicates with the switch (OFS) 20 and the access source host 30 through the user network.

### (Difference between authentication and permission)

In the present invention, the "authentication" means clarification of identity/origin of a user. Also, the "permission" means determination of whether or not the action (connection) of the user is permitted.

### (Commonalization of configuration of host)

Note that the access source host 30 and the access destination host 40 may have an identical configuration. For example, a host apparatus having all of the authentication processing section 31, the user process executing section 32, the permission processing section 41 and the service executing section 42 may be used as the access source host 30 and the access destination host 40.

### (Initial state of flow table)

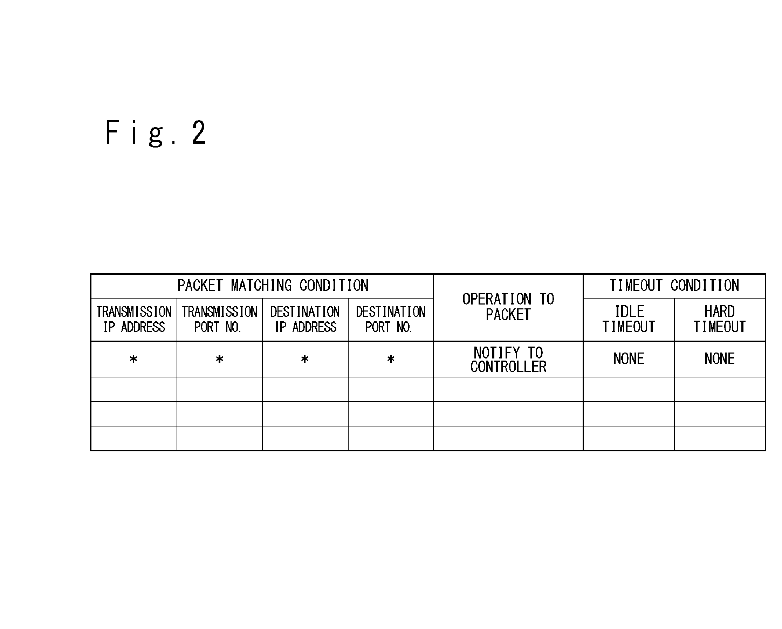

Referring to FIG. 2, the initial state of the flow table 22 will be described.

Only one flow entry (default entry) is registered on the flow table 22 in an initial state.

This flow entry (default entry) contains data of the "packet matching condition" (rule), the "operation to the packet" (action), and the "time-out condition".

The wildcard "*" showing optional data is specified in the 4 items of the packet matching condition (the "transmission source IP address", the "transmission source port number", the "destination IP address", and the "destination port number").

An operation of "notification to the controller" is specified as the operation to the packet.

"No" is specified in 2 items of the time-out condition (the "idle time-out" and the "hard time-out"). That is, nothing is specified.

In the initial state, all the packets which arrive at the switch (OFS) 20 (optional packets) always match the flow entry (default entry). Therefore, in the initial state, the switch (OFS) 20 notifies all the arriving packets (optional packets) to the controller (OFS) 10.

In the flow entry, a priority may be specified in the specification and form which conform to the open flow protocol. Although not shown, a priority of the lowest level is allocated to the flow entry (default entry). When there is not any other flow entry which matches the packet which has arrived at the switch (OFS) 20, this flow entry (default entry) is applied to the packet. When one flow entry is registered from the controller (OFS) 10, and there is the matching flow entry, another matching flow entry is applied to the packet, because a priority with a higher level than the flow entry (default entry) is allocated to the other matching flow entry.

### (Authentication/permission processing)

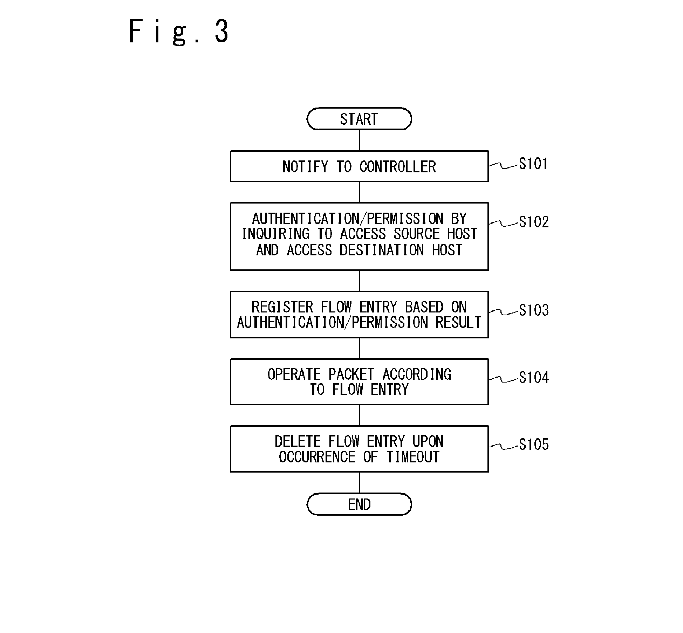

Referring to FIG. 3, a flow of the processing of authentication/permission in the present invention will be described.

In the present invention, a flow entry is registered in an "on demand" to realize a packet transfer and an access control, by making the controller (OFC) 10 and the switch (OFS) 20 cooperate.

### (1) Step S101

When receiving a first packet, the switch (OFS) 20 notifies to the controller (OFC) 10. Note that the first packet is an unknown packet in which there is no flow entry which matches other than the default entry in the flow table 22 of the switch (OFS) 20.

### (2) Step S102

The controller (OFC) 10 inquires the notified packet to the access source host 30 and the access destination host 40 and carries out the authentication/permission.

### (3) Step S103

The controller (OFC) 10 determines the contents of the flow entry based on the result of the authentication/permission and instructs the switch (OFS) 20 to register the flow entry on the flow table.

### (4) Step S104

The switch (OFS) 20 operates (carry out transfer/discard) packets of a same type according to the contents of the flow entry when receiving the packets of the same type after registration of the flow entry.

### (5) Step S105

The switch (OFS) 20 deletes a flow entry when the time-out of the flow entry has occurred.

Note that the switch (OFS) 20 carries out the processing of (1) Step S101 and the subsequent steps when receiving the packet of the same type again after the deletion of the flow entry. Even if the packet is of the same type, this is because the packet returns to the first packet again after the deletion of the flow entry.

Also, the switch has a function of limiting the use by the user who repeats an unauthorized access, in order to prevent that the flow entries of the switch (OFS) 20 lack because of the DoS attack (Denial of Service attack).

A "SYN Flood" attack as a general attack of the Dos attack is an attack to make the resources of a server lack by an attacker stopping the procedure of TCP connection in a halfway state. As mentioned above, in order to establish the TCP connection between the client and the server, a proper procedure needs to be executed in which the client transmits the "SYN packet" to the server, the server replies to an "ACK packet" to the client and finally the client sends back the ACK packet to the server. Until the last ACK packet reaches, the server waits in the state of "waiting for a reply", and cannot make the resources such as a memory area prepared for the connection free. If the attacker having malevolence transmits a huge amount of SYN packets and leaves without intentionally sending the ACK packet, the number of connections in the "reply waiting state" on the side of the server exceeds a limit so that a connection cannot be received newly.

### (Specific instances)

Specific operations will be described in the following three cases:
(A) Permission of access (registration of flow entry of "transfer"),
(B) Refusal of access (registration of flow entry of "discard"), and
(C) Limit of use of unauthenticated user (deletion of flow entry of "discard").
(A) Permission of access (registration of flow entry of "transfer")

First, the operation when receiving a packet that the access should be permitted will be described.

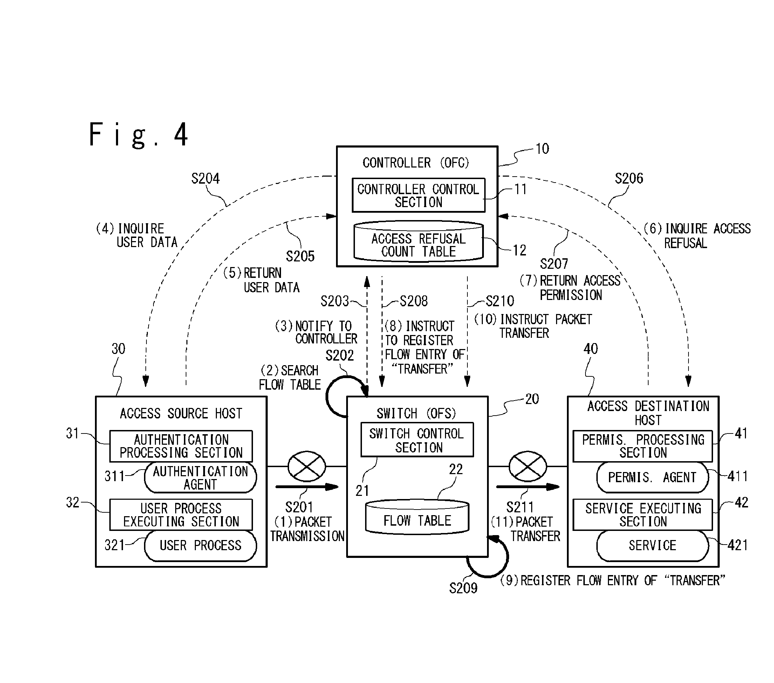

Referring to FIG. 4, a series of operations when a user having an appropriate authority tries an access to the flow table 22 in the initial state shown in FIG. 2 will be described.

### (1) Step S201

The user process executing section 32 of the access source host 30 executes a process 321 of the user and transmits a packet to the switch (OFS) 20 to try communication with the access destination host 40.

### (2) Step S202

The switch control section 21 of the switch (OFS) 20 searches the flow table 22 when receiving the packet from the access source host 30, to determine the flow entry which matches the packet. In this case, the flow entry which matches the packet is a flow entry (default entry) which has a wild card "*" for each of items of the packet matching condition and in which the operation to the packet is "notification to controller", as shown in FIG. 2.

### (3) Step S203

The switch control section 21 of the switch (OFS) 20 notifies the packet to the controller (OFC) 10 according to the flow entry (default entry). At this time, the switch control section 21 of the switch (OFS) 20 transfers a copy of the packet to the controller (OFC) 10 and suspends the packet itself.

### (4) Step S204

The controller control section 11 of the controller (OFC) 10 inquires user data to the access source host 30 as the source of the notified packet. The inquiry of user data is given a transmission source port number of the packet.

### (5) Step S205

The authentication processing section 31 of the access source host 30 specifies the process 321 of the user which transmitted the packet, based on the transmission source port number of the packet through the operation of the authentication agent 311 when receiving the inquiry of user data, and returns the user data of the user who has executed the specified process, to the controller (OFC) 10.

### (6) Step S206

The controller control section 11 of the controller (OFC) 10 inquires the permission or refusal of access to the access destination host 40 which is the destination of the packet. The user data is given to the inquiry of this permission or refusal of access.

### (7) Step S207

The permission processing section 41 of the access destination host 40 determines the permission or refusal of access based on the user data by the operation of the permission agent 411, when receiving the inquiry of the permission or refusal of access, and returns the result to the controller (OFC) 10. In this case, the permission processing section 41 of the access destination host 40 determines the "access permission" and returns the data of the "access permission" to the controller (OFC) 10.

### (8) Step S208

The controller control section 11 of the controller (OFC) 10 instructs the switch (OFS) 20 register the flow entry of "transfer", when receiving the data of the "access permission".

### (9) Step S209

The switch control section 21 of the switch (OFS) 20 registers the flow entry of "transfer" on the flow table 22 in response to the instruction from the controller (OFC) 10, and notifies that the registration of the flow entry of "transfer" has succeeded (completed), to the controller (OFC) 10.

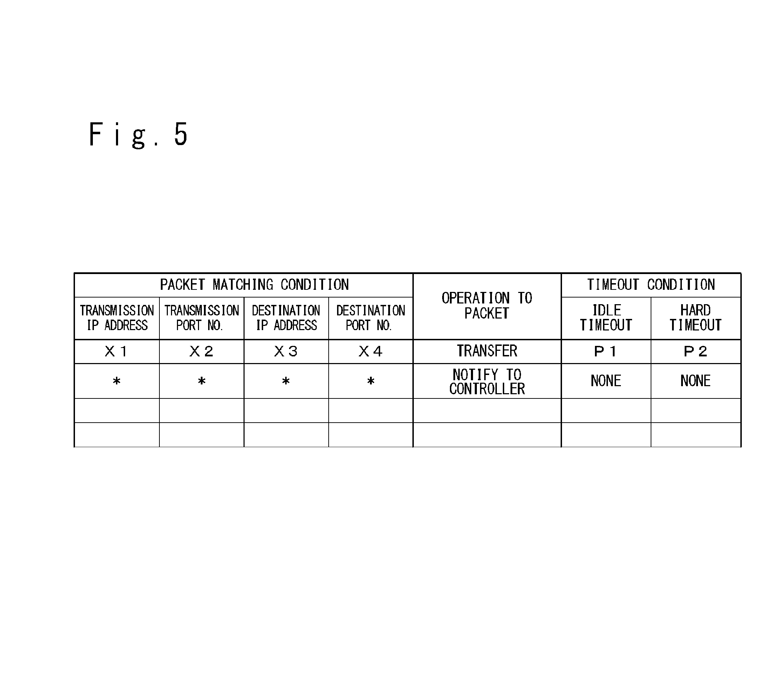

At this point, the flow table 22 changes to the state as shown in FIG. 5. The contents of the flow entry of "transfer" which is registered on the flow table 22 are as follows.
(1) Packet matching condition:
   "Transmission source IP address" = "X1" (an IP address of the access source host which received the access permission)
   "Transmission source port number" = "X2" (an port number of the access source host which received the access permission)
   "Destination IP address" = "X3" (IP address of the access destination host which received the access permission)
   "Destination port number" = "X4" (port number of the access destination host which received the access permission)
(2) Operation to packet:
   "Action" = "transfer" (transfer packet from the access source host to the access destination host)
(3) Time-out condition
   "Idle time-out" = "P1" (time during which the "transfer" flow entry is unused)
   "Hard time-out" = "P2" (time from when the "transfer" flow entry is registered)

### (10) Step S210

The controller control section 11 of the controller (OFC) 10 instructs the switch (OFS) 20 to transfer the notified packet after registering the flow entry.

### (11) Step S211

The switch control section 21 of the switch (OFS) 20 transfers the suspended packet to the access destination host 40 in response to the instruction from the controller (OFC) 10.

In this way, the connection between the process 321 of the user and the service 421 is established.

Hereinafter, when receiving the packet of the connection, the switch control section 21 of the switch (OFS) 20 transfers the packet according to the contents of the flow entry registered on the flow table 22.

The switch control section 21 of the switch (OFS) 20 deletes the corresponding flow entry from the flow table 22 when the time-out of the flow entry has occurred after the time specified in the time-out condition passed away.

When the switch control section 21 of the switch (OFS) 20 receives a packet of the connection again after deleting the flow entry, the flow entry registration/packet transfer are carried out through the above-mentioned operation once again because the packet of the connection is the first packet.

Also, the reason why the processing of inquire/return of the user data can be carried out safely is in that the access source host 30 is a sharing host as mentioned above.

In this case, it is supposed that the controller (OFC) 10 and the access source host 30 are sufficiently managed under an identical substance (common administrator). In this case, it can be considered that the controller (OFC) 10 and the access source host 30 can trust mutually so that there are not problems such as camouflage and outflow of the user data.

### (B) Refusal of access (Registration of flow entry of "discard")

Next, the operation when a packet that access should be refused is received will be described.

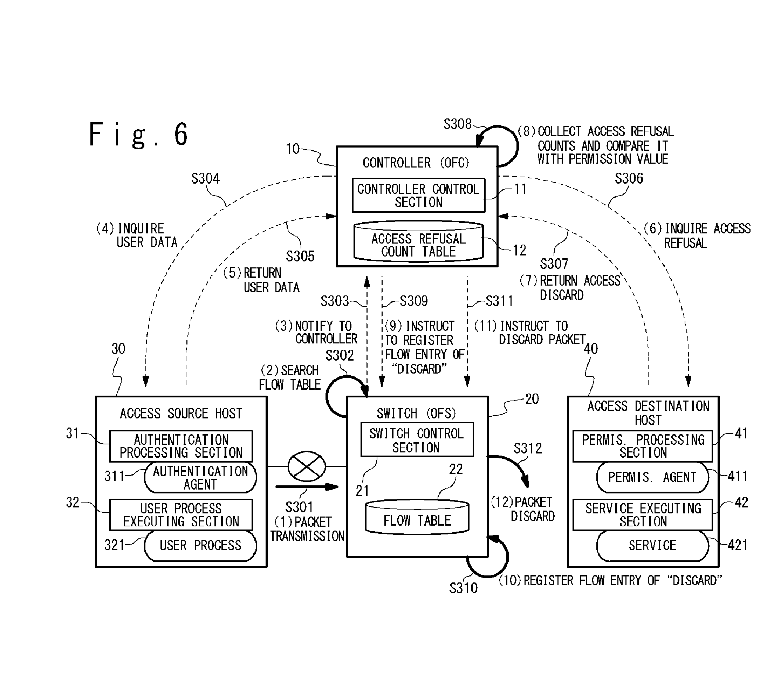

Referring to FIG. 6, a series of operations when a user who does not have appropriate authority tries access in the state that the flow entry of "transfer" is registered on the flow table (the state as shown in FIG. 5) will be described.

### (1) Step S301

The user process executing section 32 of the access source host 30 executes the process 321 of the user and transmits a packet to the switch (OFS) 20 to try communication with the access destination host 40.

### (2) Step S302

The switch control section 21 of the switch (OFS) 20 searches the flow table 22 for the flow entry matching the packet, when receiving the packet from the access source host 30. In this case, the flow entry matching the packet is a flow entry (default entry) in which each item of the matching condition is the wildcard "*" showing option, as shown in FIG. 2, and the operation to the packet is "notification to the controller".

### (3) Step S3303

The switch control section 21 of the switch (OFS) 20 notifies the packet to the controller (OFC) 10 according to the flow entry (default entry). At this time, the switch control section 21 of the switch (OFS) 20 transfers a copy of the packet to the controller (OFC) 10 and suspends the packet itself.

### (4) Step S304

The controller control section 11 of the controller (OFC) 10 inquires the user data to the access source host 30 on the transmission source side of the notified packet. A transmission source port number of the packet is assigned to the inquiry of the user data.

### (5) Step S305

The authentication processing section 31 of the access source host 30 specifies the process 321 of the user which transmitted the packet based on the transmission source port number of the packet through the operation of the authentication agent 311, when receiving the inquiry of the user data, and returns the user data of the user which executes the specified process, to the controller (OFC) 10.

### (6) Step S306

The controller control section 11 of the controller (OFC) 10 inquires permission or refusal of access to the access destination host 40 as the destination of the packet. The user data is assigned to the inquiry of the permission or refusal of access.

The operation to here is the same as the case of "(A) Permission of access (registration of the flow entry of "transfer").

### (7) Step S307

The permission processing section 41 of the access destination host 40 determines permission or refusal of access based on the user data through the operation of the permission agent 411 when receiving the inquiry of the permission or refusal of access, and returns the result to the controller (OFC) 10. In this case, the permission processing section 41 of the access destination host 40 determines to be the "access refusal" and returns data of the "access refusal" to the controller (OFC) 10.

### (8) Step S308

The controller control section 11 of the controller (OFC) 10 refers to the access refusal count table 12 to add data to the number of times of the refusal indicating the failure in the permission of the access, when receiving the data of the "access refusal". That is, the controller control section 11 of the controller (OFC) 10 sums the number of times of refusal of the user. Moreover, the controller control section 11 of the controller (OFC) 10 refers to the access refusal count table 12 and compares the number of times of refusal of the user and a predetermined permissible value. In this case, it is supposed that the number of times of refusal of the user is within a permissible value.

### (9) Step S309

The controller control section 11 of the controller (OFC) 10 issues an instruction of the registration of the flow entry of "discard" in the switch (OFS) 20.

### (10) Step S310

The switch control section 21 of the switch (OFS) 20 registers the flow entry of "discard" on the flow table 22 in response to the instruction from the controller (OFC) 10 and notifies to the controller (OFC) 10 that the registration of the flow entry of "discard" has succeeded (completed).

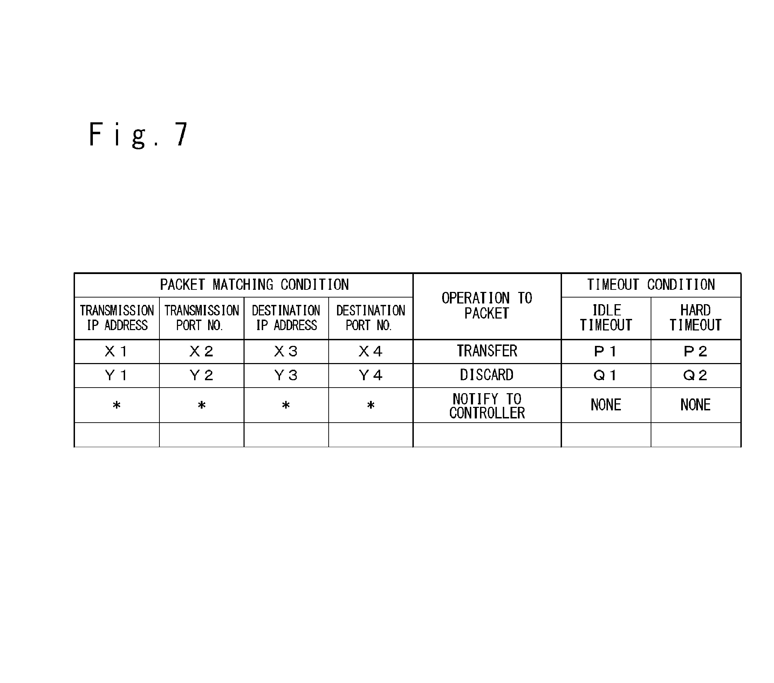

At this point, the flow table 22 changes to a state shown in FIG. 7. The contents of the flow entry of "discard" which have been registered on the flow table 22 are as follows.
(1) Packet matching condition:
   "Transmission source IP address" = "Y1" (IP address of the access source host, access by which has been refused)
   "Transmission source port number" = "Y2" (Port number of the access source host, access by which has been refused)
   "Destination IP address" = "Y3" (IP address of the access destination host which has refused the access)
   "Destination port number" = "Y4" (Port number of the access destination host which has refused the access)
(2) Operation to packet:
   "Action" = "discard" (discard a packet from the access source host to the access destination host).
(3) Time-out condition:
   "Idle time-out" = "Q1" (time during which the flow entry of "discard" is unused)
   "Hard time-out" = "Q2" (time from registration of flow entry of "discard")

In this case, a higher priority than the flow entry of "discard" is allocated to the flow entry of "transfer". However, actually, a higher priority than the flow entry of "transfer" may be allocated to the flow entry of "discard". This is because there is a case that the importance is higher in the "discard" (blocking-off) than the "transfer" (passage) of a packet, when communication is carried out in the environment that authentication is necessary.

### (11) Step S311

The controller control section 11 of the controller (OFC) 10 instructs the switch (OFS) 20 to discard the notified packet after registering the flow entry.

### (12) Step S312

The switch control section 21 of the switch (OFS) 20 discards the suspended packet in response to the instruction from the controller (OFC) 10.

Hereinafter, the switch control section 21 of the switch (OFS) 20 receives a packet of the connection and discards according to the contents of the flow entry registered on the flow table 22.

The switch control section 21 of the switch (OFS) 20 deletes the flow entry from the flow table 22 when the time specified in the time-out condition passes away, and then the time-out of the flow entry has occurred.

When the switch control section 21 of the switch (OFS) 20 receives the packet of the connection again after deleting the flow entry, the flow entry registration/packet discard are carried out in the above-mentioned operation once again, because the packet of the connection is the first packet.

### (C) Limit use by unjust user (deletion of flow entry of "discard")

Next, the operation when an unauthorized access is repeated will be described.

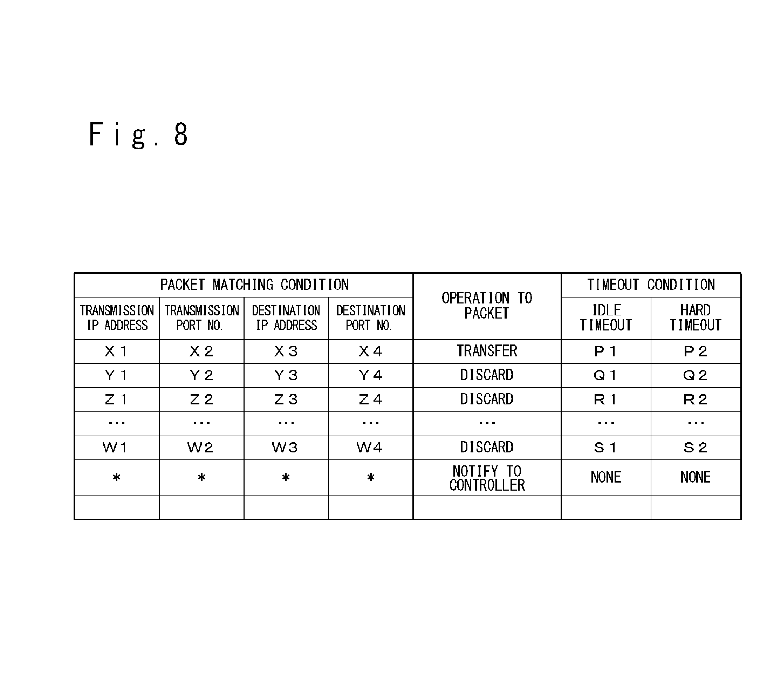

When an unauthorized access is repeated in the different matching conditions, the flow table 22 is occupied with many flow entries of "discard" as shown in FIG. 8.

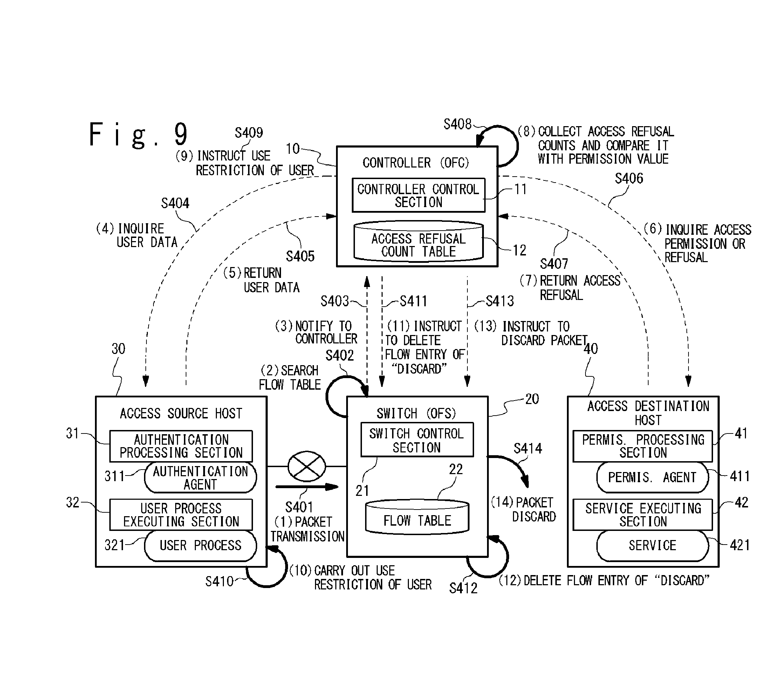

Referring to FIG. 9, a series of operations when the flow table 22 is recovered from the state occupied with the many flow entry of "discard" will be described.

### (1) Step S401

The user process executing section 32 of the access source host 30 executes the process 321 of the user, and transmits a packet to the switch (OFS) 20 to try communication with the access destination host 40.

### (2) Step S402

The switch control section 21 of the switch (OFS) 20 searches the flow table 22 for the flow entry which matches the packet, when receiving the packet from the access source host 30. Here, the flow entry which matches the packet is a flow entry (default entry) in which the operation to the packet is "notification to the controller", and each item of the matching condition is the wildcard of "*" to show an option, as shown in FIG. 2.

### (3) Step S403

The switch control section 21 of the switch (OFS) 20 notifies the packet to the controller (OFC) 10 according to the flow entry (default entry). At this time, the switch control section 21 of the switch (OFS) 20 transfers a copy of the packet to the controller (OFC) 10 and suspends the packet itself.

### (4) Step S404

The controller control section 11 of the controller (OFC) 10 inquires the user data to the access source host 30 which is the source of the notified packet. The transmission source port number of the packet is given to the inquiry of the user data.

### (5) Step S405

The authentication processing section 31 of the access source host 30 specifies the process 321 of the user which transmitted the packet based on the transmission source port number of the packet through the operation of the authentication agent 311 when receiving the inquiry of the user data, and returns the user data of the user who executed the process 321 of the user, to the controller (OFC) 10.

### (6) Step S406

The controller control section 11 of the controller (OFC) 10 inquires permission or refusal of access to the access destination host 40 which is the destination of the packet. The user data is given to the inquiry of the permission or refusal of access.

### (7) Step S407

The permission processing section 41 of the access destination host 40 determines the permission or refusal of access based on the user data through the operation of permission agent 411 when receiving the inquiry of the permission or refusal of access, and returns the result to the controller (OFC) 10. In this case, the permission processing section 41 of the access destination host 40 determines to be the "access refusal" and returns data of the "access refusal" to the controller (OFC) 10.

The steps to here are the same as the case of "(B) Refusal of access (registration of flow entry of "discard")".

### (8) Step S408

The controller control section 11 of the controller (OFC) 10 refers to the access refusal count table 12 to add a value to the number of times of failure in the permission of the access, when receiving data of the "access refusal". That is, the controller control section 11 of the controller (OFC) 10 sums the number of times of refusal of the user. Moreover, the controller control section 11 of the controller (OFC) 10 refers to the access refusal count table 12 and compares the number of times of refusal of the user and a predetermined permissible value. In this case, it is supposed that the number of times of refusal of the user reaches the permissible value/exceeds the permissible value.

### (9) Step S409

The controller control section 11 of the controller (OFC) 10 instructs the access source host 30 to carry out a use limitation on the user by using that the access source host 30 is a sharing host. The use limitation is an action which limits unjust access after that. For example, to forcedly end the process 321 of the user, and to prohibit the new log-in and the process execution of the user are exemplified. Also, it is possible to prohibit the application itself according to the process 321 of the user.

### (10) Step S410

The authentication agent 311 of the access source host 30 carries out the use limitation of the user in response to the instruction from the controller (OFC) 10. The authentication agent 311 of the access source host 30 is supposed to be managed under the same substance (common manager) as the controller (OFC) 10 and the switch (OFS) 20 in order to perform the use limitation on the user surely. That is, the manager of the controller (OFC) 10 and the switch (OFS) 20 has the same user authority as the manager of the access source host 30. Also, the authentication agent 311 of the access source host 30 is supposed to be executed in the privileged user authority which is permitted only to the manager of the access source host 30.

### (11) Step S411

The controller control section 11 of the controller (OFC) 10 issues an instruction of the deletion of the flow entry of "discard" registered on the switch (OFS) 20 through the access by the process 321 of the user. Note that when an unauthorized access is repeated in the different matching conditions, the instruction of deletion is issued for each of the flow entries of "discard" registered through the unauthorized access.

### (12) Step S412

The switch control section 21 of the switch (OFS) 20 deletes the flow entry of "discard" in the flow table 22 in response to the instruction from the controller (OFC) 10, and notifies that the deletion of the flow entry of "discard" has succeeded (completed), to the controller (OFC) 10.

### (13) Step S413

The controller control section 11 of the controller (OFC) 10 instructs the switch (OFS) 20 to discard the notified packet after registering the flow entry.

### (14) Step S414

The switch control section 21 of the switch (OFS) 20 discards the suspended packet in response to the instruction from the controller (OFC) 10.

Thus, the flow table 22 changes to a state as shown in FIG. 5 again and the overflow of flow entries can be avoided.

### <Features of the present invention>

As described above, in the present invention, the access control in units of connections can be made possible before the packet reaches a server as the connection destination. For example, at the time of transmission of the SYN packet, permission or refusal of packet transfer is determined by authenticating/permitting the transmission source user and the program.

Moreover, in the present invention, because the manager of the access source host (sharing host) is the same as the manager of the controller (OFC) and the switch (OFS), data of the user authentication obtained from the access source host (sharing host) can be used for the access control of the network.

Also, there is the following advantage in the present invention, compared with the conventional technique.

### (1) Connection procedure of user/application needs not to change from general procedure

In the present invention, the authentication/ permission of the packet is automatically carried out without being conscious of a user/application. Therefore, it is not necessary to change the connection procedure of the user/application for the authentication/permission of the packet.

### (2) No constraint in the number of connections connected simultaneously

Because a flow entry is deleted even if the connection exists, the number of flow entries in the flow table in a switch (OFS) is never constrained. Also, if receiving a packet newly even if the flow entry is deleted, the flow entry is again registered. Therefore, there is no problem such as communication becoming impossible.

### (3) Suitable for large-scale multi-stage configuration

When the switches (OFS) are configured to have a multi-stage configuration, it is sufficient to arrange a plurality of switches (OFS) under the controller (OFC). Because more connections than the number of flow entries in the flow table of the switch (OFS) can be connected at the same time, it is possible to cope with a network configuration in which routes are concentrated in a specific unit.

### <Specification change for efficiency>

In the description of the exemplary embodiments of the present invention, a basic operation has been described to clarify the point of the present invention. However, an operation of authentication/permission is only an example, and various other methods may be selected.

When the present invention is applied to an actual system, it is important to reduce the processing time for the authentication/permission. Therefore, it is exemplified to carry out the change/function addition/function switching as follows.

### (1) From viewpoint of efficiency of authentication

When transmitting an SYN packet to try a connection, an access source host adds data of a user to an SYN packet. The controller (OFC) identifies the user based on the added data.

### (2) From viewpoint of efficiency of the permission

The controller (OFC) saves the permission result returned from the access destination host as cache (cache). After that, the permission or refusal of the packet transfer is determined by referring to the cache. Thus, the opportunity/the number of times of inquiry from the controller (OFC) to the access source host the access destination host can be substantially reduced.

Or, a permission agent is not arranged in the access destination host and instead, the controller (OFC) has a function equivalent to the permission agent. That is, the controller (OFC) determines the permission or refusal of the access based on the user data from the access source host. Thus, it becomes unnecessary to inquire from the controller (OFC) to the access destination host.

By these changes, in the network system according to the present invention, it would be possible to attain the same processing speed as a usual open flow network system which is built only with the switches (OFS) and the controller (OFC). Various changes/improvements/applications are exemplified.

### (3) From viewpoint of efficiency in processing time

At the time of connection generation (packet transmission)/log-in by a user/regular routine, the access source host notifies user data to the controller (OFC). Thus, the controller (OFC) needs not to inquire to the access source host.

Or, when the access source host tries a connection to the access destination host, the controller (OFC) receives an SYN packet with the user data from the access source host. For example, when trying a connection to the access destination host, the access source host always transmits the SYN packet and the user data to the controller (OFC) through the operation of the authentication agent. The controller (OFC) calculates a route based on the SYN packet from the access source host, carries out the processing of authentication based on the user data from the access source host, and when the access is permitted, the controller (OFC) instructs the switches (OFS) on the calculated route to register the flow entry of "transfer". Note that regarding the processing of authentication, the user data is notified to the access destination host and the controller (OFC) itself may perform an inquiry of the permission or refusal of the access. Thus, it needs not to receive the notice the first packet from the switch (OFS).

Also, when the switch (OFS) has a multi-stage configuration (there are a plurality of switches (OFS) on the route), the controller (OFC) caches the authentication/permission result of the packet in preparation for a notice from the following switch (OFS) on the route. If there is the notice from the following switch (OFS), the controller (OFC) instructs the switch (OFS) to register a flow entry, based on the cached result of authentication/ permission of the packet.

Or, when the switch (OFS) has the multi-stage configuration and an unknown packet is notified from one switch (OFS), the controller (OFC) immediately instructs each of the switches (OFS) on the route to register the flow entry without caching a result of the authentication/permission of the packet.

### (4) From viewpoint of deletion of flow entry/ resource recovery of flow table

At the time of cutting of a connection, the switch (OFS) deletes the flow entry of the connection when detecting a FIN packet from the access source host.

Or, the controller (OFC) monitors empty rooms of the flow table of the switch (OFS), issues an instruction of deletion of the flow entry from the controller (OFC) to the switch (OFS) when detecting/determining the decrease of the empty rooms of the flow table, and secures the necessary number of empty rooms.

Moreover, when the registration of the flow entry fails due to a lack of empty rooms of the flow table of the switch (OFS), the controller (OFC) issues an instruction of deletion from the flow entry with the lowest use frequency at the point until the empty rooms of the flow table can be sufficiently secured.

Also, when the empty room of the flow table of the switch (OFS) decreases, the controller (OFC) decreases a permissible value of the number of times of refusal, to accelerate the deletion of the flow entry/resource recovery of the flow table.

Note that when the flow entry of "discard" enters a time-out state, the controller (OFC) may subtract the number of times of refusal the user.

### (5) From viewpoint of permission condition

Conditions such as "existence or non-existence of fee charging", "charge course", and "load situation of access destination" are added to the permission condition.

### (6) From viewpoint of configuration

The secure channel network (control network) and a user network are made common. For example, an access source host and an access destination host may communicate with a controller (OFC) through a switch (OFS).

Note that the above-mentioned operations may be combined.

### <Points of the present invention>

(1) Authentication/permission of a packet in on-demand;
(2) Deletion of flow entry in a use state; and
(3) Connection source (access source host) of a sharing host

### <Exemplification of hardware>

An example of specific hardware to realize the network system according to the present invention below will be described.

As an example of the controller (OFC), the access source host and the access destination host, computers such as a PC (personal computer), appliance, a server for thin client, a workstation, a mainframe, and a supercomputer are assumed. Also, another example of the access source host and the access destination host, an IP telephone, a portable phone, a smart phone, a smart book, a car navigation system, a carrying-type game machine, a home-use game machine, a carrying-type music player, a handy terminal, a gadget (electronic equipment), interactive TV, a digital tuner, a digital recorder, an information home appliance, an OA (Office Automation) equipment, a storefront terminal and high function copy machine, a digital signage and so on are exemplified. Note that the controller (OFC), the access source host and the access destination host may be relay equipment and peripheral equipment in addition to the terminal and the server. Also, the controller (OFC), the access source host and the computer of the access destination host may be a virtual machine (VM) built on a physical machine and an extension board loaded on a computer.

As an example of the switch (OFS), a network switch, a router, a proxy, a gateway, a firewall, a load balancer (load distribution unit), a band control unit (packet shaper), a security monitor and control equipment (SCADA: Supervisory Control And Data Acquisition), a gatekeeper, a base station, an access point (AP), a communication satellite (CS) or a computer having a plurality of communication ports and so on are exemplified. Also, it may be a virtual switch which is realized by a virtual machine (VM) built on a physical machine.

A controller (OFC), a switch (OFS), an access source host, and an access destination host may be loaded on mobile bodies such as a vehicle, a ship, and an aircraft.

Although being not shown, each of the controller (OFC), the switch (OFS), the access source host and the access destination host is realized from a processor which operates based on the program to execute predetermined processing, a memory which stores a program and various types of data, and an interface which is used for the communication with the network.

As an example of the above-mentioned processor, a CPU (Central Processing Unit), a network processor (NP), a microprocessor, a microcontroller or a semiconductor integrated circuit (LSI: Large Scale Integration) which has a function of exclusive use are exemplified.

As an example of the above-mentioned memory, semiconductor memory devices such as RAM (Random Access Memory), ROM (Read Only Memory), EEPROM (Electrically Erasable and Programmable Read Only Memory) and a flash memory, auxiliary storages such as HDD (Hard Disk Drive) and SSD (Solid State Drive), or removable disks such as DVD (Digital Versatile Disk), and storage media such as an SD memory card (Secure Digital memory card) are exemplified. Also, it may be a buffer and a register and so on. Or, it may be storage units which use DAS (Direct Attached Storage), FC-SAN (Fibre Channel - Storage Area Network), NAS (Network Attached Storage), IP-SAN (IP - Storage Area Network), and so on.

Note that the above-mentioned processor and the above-mentioned memory may be unified. For example, in recent years, the microcomputer is formed on one chip. Therefore, a case that the one-chip microcomputer is loaded in electronic equipment and functions as the above-mentioned processor and the above-mentioned memory is exemplified.

As an example of the above-mentioned interface, a substrate (motherboard, I/O board) corresponding to a network communication, a semiconductor integrated circuit such as a chip, a network adapter such as NIC (Network Interface Card), a similar expansion card, a communication device such as an antenna, and a communication port such as a connection mouths (connector) are exemplified.

Also, as an example of the network, the Internet, a LAN (Local Area Network), a wireless LAN (Wireless LAN), a WAN (Wide Area Network), a Backbone, a CATV line, a fixation telephone network, a mobile phone network, WiMAX (IEEE 802.16a), 3G (3rd Generation), a lease line, IrDA (Infrared Data Association), Bluetooth (registered trademark), a serial communication line, a data bus are exemplified.

Note that internal components of each of the controller (OFC), the switch (OFS), the access source host and the access destination host may be modules, components, an exclusive use device or these start-up (call) programs.

However, actually, the present invention is not limited to these examples.

### <Remarks>

The exemplary embodiments of the present invention have been described in detail. However, actually, the present invention is not limited to the above-mentioned exemplary embodiment and modifications in a range not apart from the scope of the present invention are contained in the present invention.

It should be noted that the present application claims a priority on convention based on Japanese Patent Application No. JP 2012-084718 and the disclosure thereof is incorporated herein by reference.

## Claims

1. A network system comprising:
a switch configured to carry out processing of a reception packet based on a flow entry which defines a rule and an action to uniformly control packets as a flow; and
a controller configured to issue an instruction of registration of the flow entry to said switch,
wherein said controller carries out processing of determination of permission or refusal of transfer of a packet arriving at said switch based on authority of a transmission source of the arriving packet, and instructs said switch to register the flow entry of transfer of the arriving packet when the transfer of the arriving packet is permitted.

2. The network system according to claim 1, wherein said switch notifies a packet to said controller when receiving the packet from an access source host which is used by a plurality of users having different authorities, and
wherein said controller inquires authentication data of a packet transmitting user to said access source host, inquires permission or refusal of access to an access destination host which is a destination of the packet, based on the authentication data, instructs said switch to register a flow entry of transfer of the packet when the access is permitted, and instructs said switch to register a flow entry of discard of the packet when the access is refused.

3. The network system according to claim 2, wherein said controller records an access refusal count when the access is refused, checks whether or not the access refusal count is within a permissible value, instructs said switch to register the flow entry of discard of the packet when the access refusal count is within the permissible value, instructs said access source host to carry out use limitation of the packet transmitting user when the access refusal count reaches the permissible value, and instructs said switch to delete the flow entry of discard of the packet.

4. The network system according to any of claims 1 to 3, wherein said controller acquires the authentication data of a packet transmitting user from said access source host when said access source host which is used by the plurality of users having different authorities tries access to an access destination host, determines permission or refusal of access based on the authentication data of a packet transmitting user, instructs said switch to register a flow entry of transfer of the packet when the access is permitted, and instructs said switch to register a flow entry of discard of the packet when the access is refused.

5. A controller comprising:
means for issuing an instruction of registration of a flow entry to a switch which carries out processing of a reception packet based on the flow entry which defines a rule and an action to uniformly control packets as a flow;
means for carrying out processing of determining permission or refusal of transfer of the packet based on authority of a packet transmitting user to a packet arriving at said switch; and
means for instructing said switch to register the flow entry of transfer of the packet when the transfer of the packet is permitted.

6. The controller according to claim 5, further comprising:
means for receiving from said switch, a notice of a packet transmitted from an access source host which is used by a plurality of users having different authorities;
means for inquiring authentication data of a packet transmitting user to said access source host;
means for inquiring permission or refusal of access to said access destination host as a destination of the packet based on the authentication data;
means for instructing said switch to register a flow entry of transfer of the packet when the access is permitted; and
means for instructing said switch to register a flow entry of discard of the packet when the access is refused.

7. The controller according to claim 6, further comprising:
means for recording an access refusal count when the access is refused;
means for checking whether or not the access refusal count is within a permissible value;
means for instructing said switch to register the flow entry of discard of the packet when the access refusal count is within the permissible value; and
means for, when the access refusal count reaches the permissible value, instructing said access source host to carry out use limitation to the packet transmitting user, and instructing said switch to delete the flow entry of discard of the packet.

8. The controller according to any of claims 5 to 7, further comprising:
means of acquiring the authentication data of a packet transmitting user from said access source host when said access source host which is used by the plurality of users having different authorities tries access to said access destination host;
means for determining permission or refusal of access based on the authentication data;
means for instructing said switch to register a flow entry of transfer of the packet when the access is permitted; and
means for instructing said switch to register a flow entry of discard of the packet when the access is refused.

9. A packet authenticating method comprising:
carrying out by a switch, processing of a reception packet based on a flow entry which defines a rule and an action to uniformly control packets as a flow; and
carrying out by a controller, processing of determining permission or refusal of transfer of a packet arriving at said switch based on authority of a packet transmitting source, and instruction of registration of the flow entry of transfer of the packet to said switch, when the transfer of the packet is permitted.

10. A non-transitory computer-readable recording medium which stores a program to make a computer execute:
instructing a switch to register a flow entry, wherein said switch processing a reception packet based on the flow entry which defines a rule and an action to uniformly control packets as a flow;
carrying out processing of determining permission or refusal of transfer of a packet arriving at said switch; and
instructing said switch to register the flow entry of transfer of the packet, when the transfer of the packet is permitted.
